# EUROPÄISCHE PATENTSCHRIFT

(11) **EP 1 478 943 B1**
(45) Veröffentlichungstag und Bekanntmachung des Hinweises auf die Patenterteilung: **20.02.2008**
(21) Anmeldenummer: 02787345.4
(22) Anmeldetag: 14.10.2002
(51) Int. Cl.: G01S 13/93, G06F 13/36

(54) **VERFAHREN UND VORRICHTUNG ZUR ÜBERMITTLUNG VON MESSDATEN ÜBER EINEN CAN-BUS IN EINEM OBJEKTERFASSUNGSSYSTEM FÜR KRAFTFAHRZEUGE**
METHOD AND DEVICE FOR TRANSMITTING MEASUREMENT DATA VIA A CAN BUS IN AN OBJECT DETECTION SYSTEM FOR MOTOR VEHICLES
PROCEDE ET DISPOSITIF DE TRANSMISSION DE DONNEES DE MESURE PAR L'INTERMEDIAIRE D'UN SYSTEME CAN-BUS DANS UN SYSTEME DE DETECTION DE DONNEES POUR VEHICULES A MOTEUR

(30) Priorität: 22.02.2002 DE 10207579; 22.03.2002 DE 10212683
(43) Veröffentlichungstag der Anmeldung: 24.11.2004
(73) Patentinhaber: ROBERT BOSCH GMBH, 70442 Stuttgart (DE)
(72) Erfinder: PINDADO, Daniel, 71634 Ludwigsburg (DE); PETSCHNIGG, Peter, 70469 Stuttgart (DE); JOHN, Dirk, 71229 Leonberg (DE); IRION, Albrecht, 70563 Stuttgart (DE); URBAN, Werner, 71665 Vaihingen/Enz (DE); ERHART, Robert, 71254 Ditzingen (DE)
(86) Internationale Anmeldenummer: PCT/DE2002/003879
(87) Internationale Veröffentlichungsnummer: WO 2003/073126

(56) Entgegenhaltungen:
- EP-A- 1 103 822
- WO-A-99/42856
- US-A- 5 229 975
- US-A- 5 574 848
- US-A- 5 907 688
- US-A- 6 035 361
- US-A- 6 111 888
- US-A1- 2001 035 907

## Beschreibung

Es wird eine Vorrichtung und ein Verfahren zur Übermittlung von Meßdaten zwischen einer Objektdetektionseinrichtung und einer Auswerteeinrichtung vorgeschlagen, wobei die Auswerteeinrichtung ein oder mehrere Datenpakete mit den für die Auswerteeinrichtung relevanten Objektbezeichnern an die Objektdetektionseinrichtung sendet, die Objektdetektionseinrichtung die aktuellen Meßdaten der erkannten Objekte in eine feste vorbestimmte Anzahl von Datenpakete einfügt und die Vorrichtung mittels des Anschlußelements zu einem Datenbus die Datenpakete auf den Datenbus ausgibt.

### Stand der Technik

Aus der Veröffentlichung "Adaptive Cruise Control System Aspects and Developments Trends" von Winner, Witte et al. veröffentlicht auf der SAE International Congress and Exposition, Detroit, 26. - 29. Februar 1996 ist ein adaptiver Geschwindigkeitsregler bekannt, der mittels Radarstrahlung vorherfahrende Fahrzeuge erkennt und in Abhängigkeit der erkannten Objekte eine Abstands- bzw. Geschwindigkeitsregelung vornimmt. Aus dieser Veröffentlichung ist bekannt, dass Meßdaten bezüglich erkannter Objekte von einem Radarsystem an einen ACC-Regler übertragen werden, wobei beide Einrichtungen in einem gemeinsamen Gehäuse untergebracht sind.

Aus der WO 99/42856 ist ein Fahrzeugradarsystem bekannt, das Warnungen bei Gefahren während eines Spurwechsels oder beim Rückwärtseinparken warnt Hierzu sind an der Rückseite des Fahrzeugs Radarsensoren angebracht, wobei drei Sensoren den Bereich hinter dem Fahrzeug überwachen sowie an jeder Seite des Fahrzeughecks ein weiterer Sensor den Bereich seitlich neben dem Fahrzeugheck überwacht. Alle Sensoren sind an ein gemeinsames Bussystem angeschlossen, das wiederum mit einer Auswerteeinrichtung verbunden ist, die aufgrund der detektierten Objekte in den Sensorerfassungsbereichen ermitteln, ob dem Fahrer eine optische bzw. akustische Warnung auszugeben ist.

Aus der US 2001/035907 A ist ein Videobilddatenreduktionssystem bekannt, bei dem ein Objekttracking zur Datenreduktion in einem Videosignal, das aus mehreren Rahmen besteht, durchgeführt wird und das von einer Bewegungsbilderkamera mit Sichtfeld empfangen wird. Hierzu werden die bewegten Objekte im Sichtfeld der Kamera bestimmt und falls diese von Interesse sind, ausgewählt. Dies geschieht entweder durch Vergleich der detektierten Objekte mit vorbestimmten Charakteristiken der interessierenden Objekte oder durch manuelle Benutzerauswahl. Für jeden Rahmen der Vielzahl von Rahmen im Videosignal wird ein Datensatz erzeugt, der auf den bewegten Objekten basiert. Falls ein Rahmen keine ausgewählten Objekte enthält wird der Datensatz für diesen Rahmen als leer gekennzeichnet.

Aus der US 5,229,975 ist ein Fahrzeugerfassungssystem bekannt, das einen Datenbus aufweist, der an einen ersten Mikroprozessor angeschlossen ist und eine Vielzahl an Sensormodulen, verteilt über die Fahrzeugperipherie aufweist, die das Vorhandensein von Objekten innerhalb eines vorbestimmten Entfernungsbereichs erkennen. Jedes Sensormodul des Fahrzeugerkennungssystems beinhaltet einen Übertrager, einen zweiten Mikroprozessor, der zwischen den Übertrager und den Bus gekoppelt ist und Information vom Übertrager verarbeitet. Weiterhin weist jedes Sensormodul eine LED auf, die an der Außenfläche des Übertragergehäuses angebracht ist, die an den zweiten Mikroprozessor angeschlossen ist um anzuzeigen, ob sich ein Objekt innerhalb des vorbestimmten Entfernungsbereichs aufhält oder ob das Sensormodul fehlerhaft arbeitet Jedes Sensormodul weist weiterhin einen Temperaturmessschaltkreis auf, der an den zweiten Mikroprozessor gekoppelt ist sowie ein Bussende- und -empfangseinheit um Information vom Bussystem zu senden oder von diesem zu empfangen.

Aus der EP 1 103 822 A2 ist eine Echtzeit-Datensortierung und -reduktion zum Filtern von Daten bekannt, bei dem ein Zellsteuerblock-Datenfeld zur Bildung eines Histogramms bekannt ist, wobei das Histogramm eine Vielzahl von Zellsteuerblöcken aufweist und jeder Zellsteuerblock der Vielzahl von Zellsteuerblocks einer entsprechenden, als Kernzelle bzw. Nichtkernzelle sowie benutz bzw. unbenutzt klassifizierbaren Zelle entspricht Jeder Zellsteuerblock der Vielzahl von Zellsteuerblocks weist einen Zellenzähler auf, ein erstes Verknüpfungswort, das auf den Anfang einer Datenausgabekette verweist, wenn die entsprechende Zelle benutzt und Kernzelle ist sowie ein zweites Verknüpfungswort, das auf eine zugehörige Kernzelle verweist, wenn die entsprechende Zelle benutzt und Nichtkernzelle ist. Das Histogramm wird in Abhängigkeit von wenigstens einem Parameter einschließlich eines ersten Parameters gebildet und weist für den ersten Parameter einen ersten unteren Grenzwert und einen ersten oberen Grenzwert auf. Eingangsdaten werden in Abhängigkeit von dem wenigstens einen Parameter zur Bildung einer Vielzahl von Ereignisbeschreibungsblocks empfangen, wobei der wenigstens eine Parameter den ersten Parameter einschließt. Dann ermittelt das Verfahren, ob jeder Ereignisbeschreibungsblock der Vielzahl von Ereignisbeschreibungsblocks einem Zellsteuerblock der Vielzahl von Zellsteuerblocks in dem Histogramm entspricht, und ermittelt in diesem Falle, ob die entsprechende Zelle des einen Zellsteuerblocks benutzt oder unbenutzt ist.

### Kern und Vorteile der Erfindung

Kern der vorliegenden Erfindung ist es, Daten zwischen einer Objektdetektionseinrichtung und einer Auswerteeinrichtung auszutauschen, wobei die Auswerteinrichtung durch ein oder mehrere Datenpakete der Objektdetektionseinrichtung die für die Auswerteinrichtung relevanten Objektbezeichner übergibt. Diese bezeichneten Objekte werden von der Objektdetektionseinrichtung, falls gemessen sicher im nächsten Zyklus übertragen. Weiterhin ist es der Gegenstand der Erfindung, dass die Auswerteeinrichtung der Objektdetektionseinrichtung ein Abstands- und/oder Geschwindigkeitsfenster vorgibt und die Objektdetektionseinrichtung nur die gemessenen Objektdaten übermittelt, deren Objekte innerhalb dieses Abstands- und/oder Geschwindigkeitsfensters liegen.

Erfindungsgemäß wird dieses durch die Merkmale der unabhängigen Ansprüche gelöst Vorteilhafte Weiterbildungen und Ausgestaltungen ergeben sich aus den Unteransprüchen.

Vorteilhafterweise fügt die Vorrichtung zur Erfassung von Objekten, die mindestens eine Objektdetektionseinrichtung sowie ein Anschlußelement zu einem Datenbus aufweist, die aktuellen Meßdaten der erkannten Objekte in das Datenpaket ein, wobei das Objekt, das von der Auswerteeinrichtung als das relevanteste ausgewählt wurde, gekennzeichnet wird. Diese Kennzeichnung geschieht vorteilhafterweise durch das Setzen eines Flags, das die Objektdaten des relevantesten Objektes identifiziert und/oder durch das Einschreiben der Daten in das Datenpaket an einer vorbestimmten Stelle des Datenpakets, beispielsweise an erster Stelle oder an letzter Stelle.

Weiterhin ist es vorteilhaft, dass das Objektdetektionssystem eine Sende- und Empfangseinrichtung für Radarstrahlung umfaßt und/oder das Objektdetektionssystem eine Sende- und Empfangseinrichtung für Lidarstrahlung umfaßt und/oder das Objektdetektionssystem eine Empfangseinrichtung für ein Bildverarbeitungssystem, beispielsweise eine Videokamera oder eine Stereovideokamera umfaßt.

Vorteilhafterweise ist der Datenbus zur Übertragung der Daten zwischen der Vorrichtung zur Objekterfassung und der Vorrichtung zur Weiterverarbeitung der Daten ein CAN-Bus. Dieser Bus arbeitet besonders zuverlässig und ist kostengünstig zu realisieren.

Vorteilhafterweise wird die erfindungsgemäße Vorrichtung in einem Kraftfahrzeug eingesetzt, wobei insbesondere der Einsatz in einer Einrichtung zur adaptiven Geschwindigkeitsregelung im Sinne einer Abstandskonstantregelung bzw. einer Geschwindigkeitskonstantregelung vorgesehen ist. Durch den modularen Aufbau derartiger Systeme, bei denen Sensoreinheit und Steuergerät getrennt angeordnet sein können, bietet sich der Einsatz des erfindungsgemäßen Gegenstandes an.

Weiterhin ist es vorteilhaft, dass die Kennzeichnung der Meßdaten des Objektes, das von der Auswerteeinrichtung als das relevanteste Objekt ausgewählt wurde, gekennzeichnet wird. Diese Kennzeichnung erfolgt beispielsweise mittels eines Flags und/oder durch das Einschreiben der Objektdaten in das Datenpaket an einer vorbestimmten Stelle. Diese vorbestimmte Stelle kann insbesondere der erste Objektdatenplatz oder der letzte Objektdatenplatz sein.

Weiterhin ist es vorteilhaft, dass die Objektdetektionseinrichtung in das Datenpaket einfügt, ob das jeweilige Objekt bereits im vorherigen Datenaustauschzyklus von der Auswerteinrichtung als relevant bezeichnet wurde oder ob es sich um ein erstmalig detektiertes bzw nicht relevantes Objekt handelt. Dies kann beispielsweise durch das Setzen eines vorbestimmten Flags geschehen.

Weiterhin ist es vorteilhaft, dass die Objektdetektionseinrichtung für jedes erkannte Objekt einen Objektbezeichner einfügt, mittels dem das Objekt sowohl von der Auswerteinrichtung als auch von der Objektdetektionseinrichtung eindeutig identifiziert werden kann.

Besonders vorteilhaft ist es, dass die Datenpakete, die von der Einrichtung, die mindestens eine Weiterverarbeitungseinrichtung aufweist, an die Einrichtung gesendet werden, die mindestens ein Objektdetektionssystem aufweist, die Objektbezeichner enthalten, deren Meßdaten im vorangegangenen Datenaustauschzyklus von der Einrichtung, die das Objektdetektionssystem aufweist, an die Einrichtung, die die Weiterverarbeitungseinrichtung aufweist, gesendet wurden und von der Weiterverarbeitungseinrichtung als relevant bewertet wurden. Hierdurch kann die Einrichtung, die das Objektdetektionssystem aufweist, feststellen, ob dieses Objekt als relevant zu bewerten ist und damit im nächsten Datenaustauschzyklus bevorzugt zu übertragen ist. Alternativ kann diese Funktion auch realisiert werden, indem durch die Objektdetektionseinrichtung durch eine Vorauswahl nach einem oder mehreren Kriterien, relevante Objekte identifiziert werden und im nächsten Datenaustauschzyklus bevorzugt übertragen werden. Als Kriterien sind z.B. Abstand zum Sensor, Querversatz zur Fahrzeugachse bzw. Sensorachse und/oder Häufigkeit der Detektionen vorstellbar.

Weiterhin ist es vorteilhaft, dass die Einrichtung zur Weiterverarbeitung der Meßdaten der Objektdetektionseinrichtung eine Entfernungsgrenze und/oder eine Geschwindigkeitsgrenze vorgibt oder zwei Entfernungsgrenzen und/oder Geschwindigkeitsgrenzen im Sinne eines Entfernungs- und/oder Geschwindigkeitsfensters vorgibt und die Objektdetektionseinrichtung nur die erkannten Objekte berücksichtigt, deren Entfernung zur Objektdetektionseinrichtung unterhalb der vorgegebenen Entfernungsgrenze liegt und/oder deren Relativgeschwindigkeit in Bezug auf das Objektdetektionssystem unterhalb der vorgegebenen Geschwindigkeitsgrenze liegt beziehungsweise deren Entfernung innerhalb des vorgegebenen Entfernungsfensters liegt und/oder deren Geschwindigkeit innerhalb des vorgegebenen Geschwindigkeitsfensters liegt. Hierdurch kann man das Datenaufkommen reduzieren, indem nur die Objekte berücksichtigt werden, die am relevantesten sind.

Weiterhin ist es vorteilhaft, dass die feste, vorbestimmte Anzahl von Datenpaketen Platz für Meßdaten von 8, 16 oder 32 Objekten vorsieht.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor ablauffähig und nur zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: eine schematische Darstellung der erfindungsgemäßen Vorrichtung,
- Figur 2: ein Ablaufdiagramm, das eine Variante des erfindungsgemäßen Verfahrens darstellt und
- Figur 3: ebenfalls ein Ablaufdiagramm, das eine weitere Ausführungsform des erfindungsgemäßen Verfahrens darstellt.

### Beschreibung von Ausführungsbeispielen

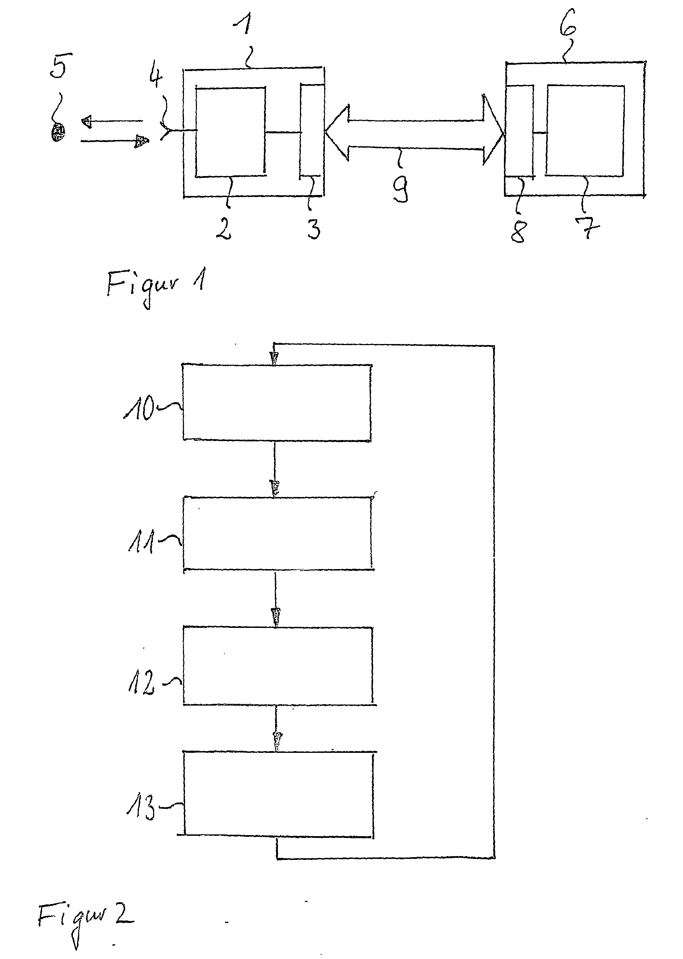

In Figur 1 ist die schematische Darstellung der erfindungsgemäßen Vorrichtungen dargestellt. Zu erkennen ist die Vorrichtung zur Objekterfassung 1, die mindestens eine Objektdetektionsrichtung 2 sowie ein Anschlußelement an einen Datenbus 3 aufweist. Die Objektdetektionseinrichtung 2 ist mit dem Anschlußelement an einen Datenbus 3 verbunden, über den Daten ausgetauscht werden können. Weiterhin ist eine Sende- und Empfangseinrichtung 4 dargestellt, mittels der die Objektdetektionseinrichtung 2 Radarstrahlung oder Lidarstrahlung aussenden kann, die an einem möglicherweise erkannten Objekt 5 reflektiert wird und von der Sende- und Empfangseinrichtung 4 empfangen wird. Im Falle, dass die Objektdetektionseinrichtung 2 als Bilderfassungseinrichtung ausgebildet ist, handelt es sich bei der Einrichtung 4 um eine reine Empfangseinrichtung, da in diesem Fall ein Aussenden von Sendesignalen nicht erforderlich ist. Die Objektdetektionseinrichtung 2 empfängt die an den Objekten 5 reflektierten Signale und ermittelt als Objektmeßdaten mindestens eine der Größen Abstand des Objekts zur Objektdetektionseinrichtung, Relativgeschwindigkeit des Objekts zur Objektdetektionseinrichtung oder Absolutgeschwindigkeit des Objekts, Relativbeschleunigung des Objekts zur Objektdetektionseinrichtung oder Absolutbeschleunigung des Objekts, Querversatz des Objekts bezogen auf die Zentralachse der Objektdetektionseinrichtung oder Quergeschwindigkeit des Objekts bezüglich der Zetralachse der Objektdetektionseinrichtung. Die zur Auswertung vorgesehenen Größen, die mindestens eine der aufgeführten Größen umfaßt, wird von der Objektdetektionseinrichtung 2 in eine feste vorbestimmte Anzahl von Datenpaketen eingeschrieben, in denen Platz für eine vorbestimmte Anzahl an Objekten mit den relevanten Meßgrößen vorgesehen ist. Diese Datenpakete werden über das Anschlußelement an einen Datenbus 3, das auch ein Gateway sein kann, mittels des Datenbusses 9 an eine Anschlußeinrichtung an einen Datenbus 8, die auch ein Gateway sein kann, einer Vorrichtung zur Weiterverarbeitung 6 weitergeleitet. Neben dem Anschlußelement zu einem Datenbus 8 weist die Vorrichtung zur Weiterverarbeitung mindestens eine Weiterverarbeitungseinrichtung 7 auf. Dieser Weiterverarbeitungseinrichtung 7 werden die Meßdaten des empfangenen Datenpaketes zugeführt und für die jeweils vorgesehenen Anwendungen verarbeitet.

Gemäß eines Ausführungsbeispiels ist es denkbar, dass die Weiterverarbeitungseinrichtung 7 ein oder mehrere Datenpakete mittels des Anschlußelementes an einen Datenbus 8 zurücksendet, wobei in diesem/n Datenpaket/e lediglich die Objektbezeichnungen der empfangenen Objekte vorgesehen sind. Dieses zurückgesendete Paket wird von dem Anschlußelement an einen Datenbus 3 empfangen und an die Objektdetektionseinrichtung 2 weitergegeben. Dort werden die von der Vorrichtung zur Weiterverarbeitung 6 gesandten Objektbezeichner mit den aktuell detektierten Objekten verglichen und als relevant gekennzeichnet. Die Meßgrößen der erkannten Objekte 5 werden von der Objektdetektionseinrichtung 2 in das Datenpaket geschrieben, wobei auch eingetragen wird, ob es sich um ein neu erkanntes bzw. nicht relevantes Objekt handelt, sowie um ein von der Weiterverarbeitungseinrichtung 7 als relevant ausgewähltes Objekt 5 handelt, das gesondert markiert wird. Diese Markierung kann beispielsweise durch das Setzen eines Flags in dem zu markierenden Objektgrößensatz des Datenpakets geschehen oder aber durch das Einschreiben der Meßgrößen an einem speziell bestimmten Platz des Datenpaketes, beispielsweise an erster oder letzter Stelle. Die auf diese Art und Weise aktualisierten Datenpakete werden wiederum über die Anschlußelemente an einen Datenbus 3, 8 sowie den Datenbus 9 an die Weiterverarbeitungseinrichtung 7 gesendet, in der die neuen Daten entsprechend weiterverarbeitet werden.

Gemäß einer weiteren Ausführungsform gibt die Weiterverarbeitungseinrichtung 7 mittels Datenpakete an die Objetkdetektionseinrichtung 2 neben den Bezeichnungen der relevanten Objekte 5 auch eine Entfernungs- und/oder Geschwindigkeitsgrenze vor, die im weiteren auch als D/V-Fenster bezeichnet wird. Dieses D/V-Fenster besteht aus einem oder zwei Grenzabständen und/oder einer oder zwei Grenzgeschwindigkeiten, die an die Objektdetektionseinrichtung 2 mittels Datenpakete übermittelt werden. Die Objektdetektionseinrichtung 2 filtert daraufhin die erkannten Objekte 5 dahingehend, dass nur die Objekte 5 weiterverarbeitet und an die Weiterverarbeitungseinrichtung 7 übermittelt werden, deren Abstände zum Sende- und Empfangselement 4 geringer sind als die von der Weiterverarbeitungseinrichtung 7 vorgegebene Entfernungsgrenze ist und/oder deren detektierte Geschwindigkeiten unterhalb der von der Weiterverarbeitungseinrichtung 7 vorgegebenen Geschwindigkeitsgrenze ist, beziehungsweise deren Abstände innerhalb des vorgegebenen Abstandsfensters und/oder deren Geschwindigkeiten innerhalb des vorgegebenen Geschwindigkeitsfensters liegen. Durch diese Maßnahme wird die Anzahl der erkannten Objekte 5 auf den Bereich begrenzt, der für die Weiterverarbeitungseinrichtung 7 von besonderem Interesse ist, wodurch die Objektdetektionseinrichtung 2 das zu übermittelnde Datenaufkommen reduziert.

In Figur 2 ist ein Ablaufdiagramm des erfindungsgemäßen Verfahrens dargestellt. In Block 10 ist vorgesehen, dass die Vorrichtung zur Weiterverarbeitung 6 an die Vorrichtung zur Objekterfassung 1 ein oder mehrere Datenpakete sendet, das die von der Weiterverarbeitungseinrichtung 7 als relevant ausgewählten Objekte enthält. Diese Datenpakete werden über ein Anschlußelement an einen Datenbus 8, das auch ein Gateway sein kann, einen Datenbus 9, sowie ein Anschlußelement an einen Datenbus 3, das ebenfalls ein Gateway sein kann, übermittelt. In einem nächsten Schritt, der als Block 11 dargestellt ist, trägt die Objektdetektionseinrichtung 2 die Meßgrößen der erkannten Objekte 5 in eine feste vorbestimmte Anzahl von Datenpakete ein, wobei zu den jeweiligen Objektdaten zusätzlich vermerkt wird, ob es sich hierbei um ein neu erkanntes oder ein für die Auswerteinrichtung relevantes Objekt handelt. Weiterhin kann vorgesehen sein, dass das von der Weiterverarbeitungseinrichtung 7 als relevantestes Objekt ausgewählte Objekt 5 gesondert gekennzeichnet wird, indem beispielsweise die betreffenden Objektmeßdaten mittels eines Flags gekennzeichnet werden oder die Objektmeßdaten an einer vorbestimmten Stelle in das Datenpaket geschrieben werden. Im darauffolgenden Schritt 12, werden die feste vorbestimmte Anzahl von Datenpaketen von der Objektdetektionseinrichtung 2 an eine Weiterverarbeitungseinrichtung 7 übermittelt. Im Schritt 13 liest die Weiterverarbeitungseinrichtung 7 die übermittelten Meßdaten aus dem Datenpaket aus und schickt ein oder mehrere Datenpakete, die die Objektbezeichnungen der für die Weiterverarbeitungseinrichtung 7 relevanten Objekte enthält, in dem darauf folgenden Schritt 10 wieder an die Objektdetektionseinrichtung 2 zurück. Es ist auch vorstellbar, dass das vorgestellte Verfahren derart abgewandelt wird, dass das Datenpaket zwischen der Vorrichtung zur Objekterfassung 1 und der Vorrichtung zur Weiterverarbeitung 6 nicht kontinuierlich hin und her gesendet wird, sondern dass die Objektdetektionseinrichtung 2 kontinuierlich neue Datenpakete generiert, diese mit den Meßgrößen in beschriebener Weise füllt und im weiteren an die Weiterverarbeitungseinrichtung 7 sendet. In diesem Fall erfolgt eine Vorauswahl für relevante Objekte nach ein oder mehreren Kriterien in der Objektdetektionseinrichtung. Als Kriterien sind z.B. Abstand zum Sensor, Querversatz zur Fahrzeugachse bzw. Sensorachse und/oder Häufigkeit der Detektionen vorstellbar.

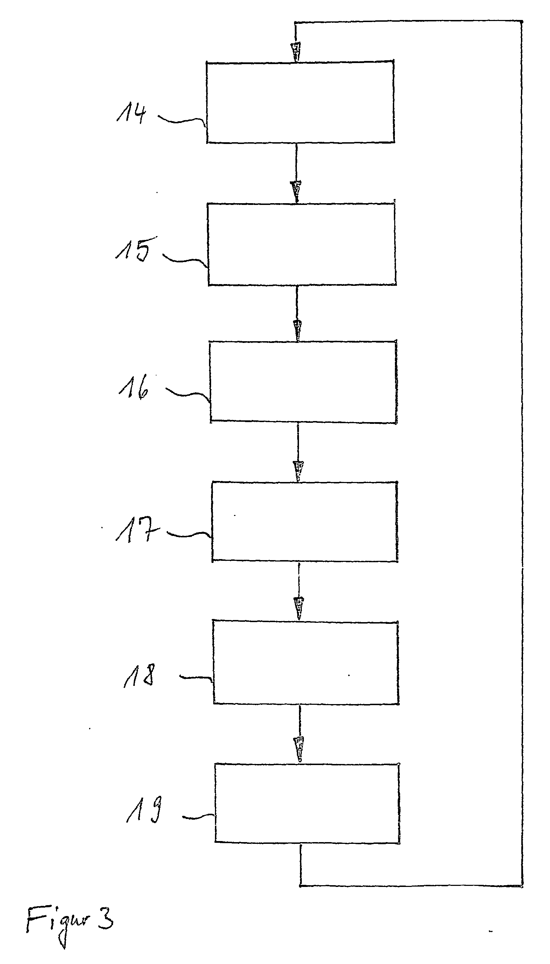

In Figur 3 ist eine weitere Variante des beschriebenen Verfahrens dargestellt. In Block 14 ist vorgesehen, dass die Vorrichtung zur Weiterverarbeitung 6 an die Vorrichtung zur Objekterfassung 1 ein oder mehrere Datenpakete sendet, wobei diese Datenpakete die Objektbezeichnungen der für die Auswerteinrichtung relevanten Objekteenthalten, sowie ein D/V-Fenster enthalten, das als Filtervorgabe für die Objektdetektionseinrichtung 2 vorgesehen ist. Im nächsten Schritt 15 filtert die Objektdetektionseinrichtung 2 die erkannten Objekte nach den Kriterien des vorgegebenen D/V-Fensters, indem nur die Objekte weiterverarbeitet werden, deren Abstand zur Sende- und Empfangseinrichtung 4 geringer ist als der vorgegebenen Abstandsgrenzwert des D/V-Fensters und/oder nur die Objekte weiterverarbeitet werden, deren gemessene Geschwindigkeit geringer ist als der vorgegebene Geschwindigkeitsgrenzwert des D/V-Fensters beziehungsweise nur die Objekte weiterverarbeitet werden, deren Abstand innerhalb des vorgegebenen Entfernungsfensters und/oder deren gemessene Geschwindigkeit innerhalb des vorgegebenen Geschwindigkeitsfensters liegen. Im nächsten Schritt 16 schreibt die Objektdetektionseinrichtung 2 die Objektmeßdaten der gefilterten Objekte in eine feste vorbestimmte Anzahl von Datenpaketen, wodurch eine eine Beschränkung auf für die Auswerteinrichtung relevanten Daten erreicht wird. Weiterhin werden die in die Datenpakete geschriebenen Objektdaten dahingehend gekennzeichnet, ob es sich hierbei um ein erstmalig erkanntes Objekt oder um ein von der Auswerteinrichtung im vorhergehenden Datenaustauschzyklus als relevant gekennzeichneten Objekt handelt. Diese Information wird von der Objektdetektionseinrichtung 2 durch den Vergleich der von der Weiterverarbeitungseinrichtung 7 übermittelten Objektbezeichnungen mit den aktuellen Meßdaten der erkannten Objekte 5 erreicht. Im darauffolgenden Schritt 17 werden die Datenpaket von der Objektdetektionseinrichtung 2 über die Anschlußelemente an einen Datenbus 3 und 8 sowie über den Datenbus 9 an die Weiterverarbeitungseinrichtung 7 weitergeleitet. Im folgenden Schritt 18 werden die Meßdaten der Datenpakete von der Weiterverarbeitungseinrichtung 7 ausgelesen und im Rahmen der vorgesehenen Weiterverarbeitung verarbeitet. Im nächsten Schritt 19 wird ein oder mehrere Datenpakete zurückgeschickt, das die Objektbezeichnungen der von der Weiterverarbeitungseinrichtung 7 als relevant ausgewählten Objekte enthält sowie die neuen Abstands- und/oder Geschwindigkeitsgrenzwerte, die das neue D/V-Fenster vorgeben. Auch in diesem Ausführungsbeispiel ist es denkbar, dass die Datenpakete, die über den Datenbus 9 zwischen der Vorrichtung zur Objekterfassung 1 und der Vorrichtung zur Weiterverarbeitung 6 hin und her gesendet wird nur in eine Richtung übermittelt wird. Hierzu generiert die Objektdetektionseinrichtung 2 in der Vorrichtung zur Objekterfassung 1 laufend neue Datenpakete, die mit den Objektmeßdaten versehen werden und sendet dieses Datenpaket an die Weiterverarbeitungseinrichtung 7. Dabei wird durch die Objektdetektionseinrichtung durch eine Vorauswahl nach ein oder mehreren Kriterien relevante Objekte identifiziert und im Datenaustauschzyklus bevorzugt übertragen. In diesem Fall wird nur das neue D/V-Fenster, das aus einem Abstands- und/oder Geschwindigkeitsgrenzwert besteht, in entgegengesetzter Richtung, also von der Vorrichtung zur Weiterverarbeitung 6 an die Vorrichtung zur Objekterfassung 1 gesendet. Es ist weiterhin auch denkbar, dass der Vorrichtung zur Objekterfassung 1 ein entsprechendes D/V-Fenster nur einmalig vorgegeben wird und die Abstands- und/oder Geschwindigkeitsgrenzwerte dauerhaft in der Objektdetektionseinrichtung 2 gespeichert werden. In diesem Fall entfällt die Veränderung und Übermittlung der neuen D/V-Fensterwerte von der Weiterverarbeitungseinrichtung 7 an die Objektdetektionseinrichtung 2.

## Patentansprüche

1. Vorrichtung die in einem Kraftfahrzeug zur adaptiven Geschwindigkeitsregelung im Sinne einer Abstandskonstantregelung bzw. im Sinne einer Geschwindigkeitskonstantregelung vorgesehen ist, wobei zur Erfassung von Objekten und zur Ausgabe der ermittelten Objektdaten, die Vorrichtung mindestens eine Objektdetektionseinrichtung (2) mit einem Anschlußelement (3) zu einem Datenbus (9) aufweist, sowie eine Weiterverarbeitungsvorrichtung (7) mit einem weiteren Anschlußelement (8) zu dem Datenbus (9) aufweist, wobei die mindestens eine Objektdetektionseinrichtung (2) mittels ihres Anschlußelements (3) zu dem Datenbus (9) eine feste vorbestimmte Anzahl von Datenpaketen sendet, die zur Übermittlung von Messdaten bis zu einer maximal möglichen Anzahl erkannter Objekte vorgesehen ist, wobei die mindestens eine Objektdetektionseinrichtung (2) die aktuellen Meßdaten der erkannten Objekte in besagte feste vorbestimmte Anzahl von Datenpaketen einfügt, wobei das Objekt, das von der Weiterverarbeitungseinrichtung (7) als das relevanteste ausgewählt wurde, **gekennzeichnet** wird und dass diese Kennzeichnung der Meßdaten des relevantesten Objektes mittels eines Flags erfolgt und dass die mindestens eine Objektdetektionseinrichtung (2) mittels ihres Anschlußelements (3) zum Datenbus (9) die Datenpakete auf den Datenbus (9) ausgibt, und der Weiterverarbeitungseinrichtung (7) über das weitere Anschlußelement (8) an den Datenbus zuführt,
**dadurch gekennzeichnet, dass** die Weiterverarbeitungseinrichtung (7) ein oder mehrere Datenpakete mittels des weiteren Anschlußelementes (8) an den Datenbus (9) zurücksendet wobei in diesen Datenpaketen lediglich die Objektbezeichnungen der empfangenen Objekte vorgesehen sind und dieses zurückgesendete Paket von dem Anschlußelement (3) an dem Datenbus (9) empfangen und an die Objektdetektionseinrichtung (2) weitergegeben wird und in der Objektdetektionseinrichtung (2) die von der Weiterverarbeitungseinrichtung (7) gesandten Objektbezeichner mit den aktuell detektierten Objekten verglichen und als relevant **gekennzeichnet** werden.

2. Vorrichtung nach Anspruch 1, **dadurch gekennzeichnet, dass** das Objektdetektionssystem (2) eine Sende- und Empfangseinrichtung für Radarstrahlung und/oder eine Sende- und Empfangseinrichtung für Lidarstrahlung und/oder eine Empfangseinrichtung für ein Bildverarbeitungssystem ist.

3. Vorrichtung nach einem der vorhergehenden Ansprüche, **dadurch gekennzeichnet, dass** der Datenbus (9) ein CAN-Bus ist.

## Claims

1. Device which is provided in a motor vehicle for adaptive cruise control in the sense of inter-vehicle distance stabilization or speed stabilization, wherein, in order to sense objects and to output the required object data, the device has at least one object detection device (2) with a connection element (3) which connects a data bus (9) and a further processing device (7) with a further connection element (8) which connects to the data bus (9), wherein the at least one object device (2) transmits, by means of its connection element (3) which connects to the data bus (9), a fixed predetermined number of data packets which is provided for transferring measurement data up to a maximum possible number of detected objects, wherein the at least one object detection device (2) inserts the current measurement data of the detected object into said fixed, predetermined number of data packets, wherein the object which has been selected as the most relevant one by the further processing device (7) is **characterized**, and in that this characterization of the measurement data of the most relevant object is carried out by means of a flag, and in that the at least one object detection device (2) outputs the data packets to the data bus (9) by means of its connection element (3) which connects to the data bus (9) and feeds said data packets to the further processing device (7) via the further connection element (8) which connects to the data bus, **characterized in that** the further processing device (7) sends back one or more data packets by means of the further connection element (8) which connects to the data bus (9), wherein only the object designations of the received objects are provided in these data packets and this packet which has been transmitted back from the connection element (3) to the data bus (9) is received and passed on to the object detection device (2) and, in the object detection device (2), the object designations which have been transmitted by the further processing device (7) are compared with the currently detected objects and are **characterized** as relevant.

2. Device according to Claim 1, **characterized in that** the object detection system (2) is a transmitter and receiver device for radar radiation and/or a transmitter and receiver device for lidar radiation and/or a receiver device for an image processing system.

3. Device according to one of the preceding claims, **characterized in that** the data bus (9) is a CAN bus.

## Revendications

1. Dispositif de régulation adaptative de la vitesse d'un véhicule automobile dans le sens d'une régulation d'un intervalle constant ou dans le sens d'une régulation de vitesse constante,
selon lequel
pour saisir des objets et pour émettre des données concernant des objets déterminés, le dispositif comporte au moins une installation de détection d'objets (2) munie d'un élément de raccordement (3) sur un bus de données (9) ainsi qu'un dispositif de poursuite de traitement (7) avec un autre élément de raccordement (8) sur un bus de données (9),
au moins une installation de détection d'objets (2) émettant par son élément de branchement (3) vers le bus de données (9), un nombre fixe prédéfini de paquets de données pour déterminer des données de mesure jusqu'à un nombre maximum possible d'objets reconnus,
au moins l'installation de détection d'objets (2) insérant les données de mesure actuelles de l'objet reconnu dans le nombre prédéfini de manière fixe de paquets de données,
l'objet qui a été sélectionné comme le plus caractéristique par l'installation de poursuite de traitement (7) étant référencé et en ce que cette référence des données de mesure de l'objet le plus caractéristique se fait à l'aide d'un drapeau et
au moins une installation de détection d'objets (2) émet, à l'aide de son élément de raccordement (3), sur le bus de données (9), les paquets de données sur le bus de données (9) et les fournit à l'installation de poursuite de traitement (7), par l'autre élément de raccordement (8) sur le bus de données,
**caractérisé en ce que**
l'installation de poursuite de traitement (7) envoie en retour un ou plusieurs paquets de données par l'autre élément de raccordement (8) vers le bus de données (9),
ces paquets de données contenant uniquement les désignations d'objets correspondant aux objets reçus et le paquet envoyé en retour est reçu par l'élément de branchement (3) au bus de données (9) et transmis ensuite à l'installation de détection d'objets (2) et dans cette installation de détection d'objets (2), les descripteurs d'objets envoyés par l'installation de poursuite de traitement (7) sont comparés aux objets détectés actuellement et sont considérés comme intéressants.

2. Dispositif selon la revendication 1,
**caractérisé en ce que**
le système de détection d'objets (2) est un système d'émission et de réception de rayonnement Lidar et/ou une installation de réception pour un système de traitement d'image.

3. Dispositif selon l'une des revendications précédentes,
**caractérisé en ce que**
le bus de données (9) est un bus CAN.
